Europäisches Patentamt

European Patent Office

Office européen des brevets

(11) Publication number: **0 353 034**
**A2**

## (12) EUROPEAN PATENT APPLICATION

(21) Application number: 89307569.7

(22) Date of filing: 25.07.89

(51) Int. Cl.5: **E 03 F 7/10**
**B 01 D 17/02, C 02 F 1/40**

(30) Priority: 25.07.88 GB 8817682

(43) Date of publication of application:
31.01.90 Bulletin 90/05

(84) Designated Contracting States:
DE ES FR GB IT NL

(71) Applicant: **HYDROVAC INDUSTRIAL & PETROLEUM SERVICES LIMITED**
**Kenfig Industrial Estate**
**Kenfig Port Talbot West Glamorgan SA13 2PE (GB)**

(72) Inventor: **Bennett, Anthony Christopher**
**239, Maes-y-Felin**
**Wild Mill Bridgend Mid Glamorgan (GB)**

**Shipton, Douglas William**
**108, Saunders Way**
**Derwen Fawr Swansea (GB)**

**Eddolls, Robert**
**26, Brunel Close**
**Tonna Neath West Glamorgan (GB)**

(74) Representative: **Austin, Hedley William et al**
**Urquhart-Dykes & Lord Alexandra House 1 Alexandra Road**
**Swansea West Glamorgan SA1 5ED (GB)**

(54) Method and apparatus for draining waste pits.

(57) The apparatus for draining a waste pit 10 comprises
(a) a cyclone 11 to which a vacuum pump 12 is connected for extracting the contents of the pit 10 via line 14;
(b) an oil/water separator 26 which discharges the oil to an accumulation tank 27 and the water to a tank 28; and
(c) a water recycle line 34 which recycles some of the separated water to the pit. The apparatus is all mounted on the chassis (not shown) of a mobile vehicle.

## Description

## Method and Apparatus for Draining Waste Pits

This invention relates to a method and apparatus for draining waste pits, and is applicable particularly, but not exclusively, to draining waste pits containing large amounts of oil or fat, in addition to aqueous material.

At present, it is conventional to remove the contents of a waste pit and to transport the contents to another site for dumping separating or other treatment.

According to the present invention, there is provided mobile draining apparatus for waste pits, which comprises a vehicle having mounted thereon:
means for extracting waste material from a waste pit;
a water separator for removing water from other constituents of the extracted waste material,
means for returning at least some of the water separated to the waste pit;
a container for accumulation and storage of waste material; and
means for passing waste material from which water has been separated from said water separator to said container.

Preferably the apparatus according to the invention includes a solids separator to remove solids, which may comprise fat or grease, from the waste material extracted from the pit. The solids separator may be a moving belt filter, through which liquids can pass and on which solids will be retained.

The apparatus according to the invention has the advantage that it can be more compact than conventional draining apparatus, because space is not required to accommodate the entirety of the material extracted from the pit.

The solids retained in the apparatus according to the invention are conveniently dropped from the moving belt into a holding tank. The belt may be washed by water, preferably in the form of high pressure jets, extracted from the contents after the solids have been removed.

Advantageously, the material which is not retained by the solids separator falls into a settling tank from which settled-out fines can be removed.

Preferably, the apparatus according to the invention includes an oil/water separator and means for feeding material from the settling tank to the oil/water separator, and a plurality of containers into which oil and water separated by the oil/water separator can be separately discharged.

If the separated water contains emulsified products, the apparatus according to the invention may include a clarifier, such as a centrifuge or static filter, to clarify the water. Further, the apparatus may include automatic dosing means, for adding appropriate treatment materials to the water before the latter is returned to the waste pit.

The means for extracting the contents from the waste pit conveniently includes a vacuum pump, which is arranged to raise the contents into a cyclone in which separation of air from contents takes place.

The contents may be discharged from the cyclone to the solids separator through an air lock comprising two valves at the top and bottom of a chamber, the valves being operated in sequence and at a required rate to control the discharge of the contents to the solids separator.

The vehicle constituting part of the apparatus according to the invention is typically a wheeled vehicle in which the remainder of the apparatus is mounted on a chassis thereof.

The present invention further comprises a method of draining a waste pit, which comprises providing apparatus according to the invention, extracting at least part of the contents of the pit, separating water from the extracted contents, returning at least some of the separated water to the pit, and accumulating the remainder of the extracted contents in the container mounted on the apparatus.

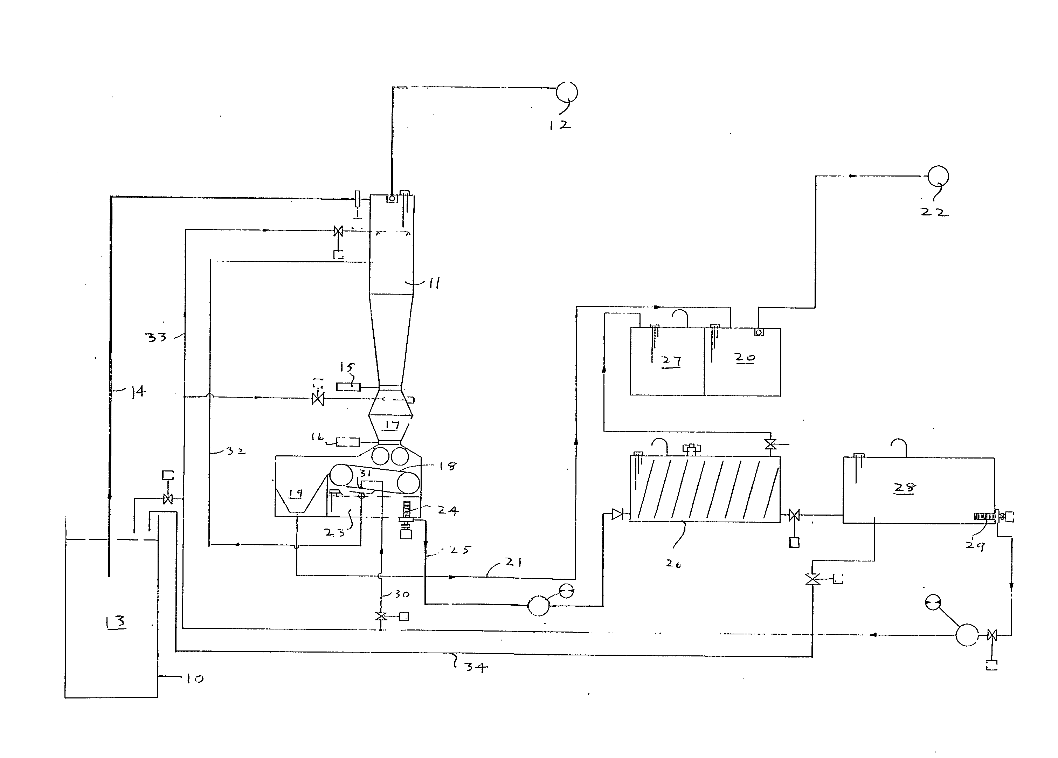

One embodiment of the invention will now be described, by way of example only, with reference to the accompanying drawing which is a flow chart in diagrammatic form showing the functions of various parts of the apparatus.

In the drawing, a waste pit 10, which does not form part of the invention, typically contains a mixture of accumulated water, solids such as fat or grease, fines and oil.

The apparatus includes a cyclone 11 to which a vacuum pump 12 is connected. The vacuum in the cyclone 11 draws the fluid contents 13 from the pit 10 through a line 14, and then into the cyclone 11 via a tangential entry, whereby air separates from the contents 13 and is removed by the vacuum pump 12.

The bottom of the cyclone 11 is closed by upper and lower valves 15,16 on either side of a chamber 17, to form an air lock. The contents 13 flowing down the cyclone 11 are discharged at a controlled rate by sequential operation of the valves 15,16 onto a power driven upwardly inclined moving belt filter 18. Solids in the contents 13 remain on the belt 18 and are discharged into a holding tank 19, from which they are drawn, as required along a line 21, to a grease tank 20 by a further vacuum pump 22.

The material which passes the belt filter 18 falls into a settling tank 23, in which fines settle out and are removed by an automatic sump or by a manual system, as required. A low shear pump 24 in the settling tank 23 pumps the liquids there along line 25 to an oil/water separator 26. Oil and water from separator 26 are passed to an oil tank 27 and water tank 28, respectively.

A pump 29 in the water tank 28 provides water under pressure, some of which passes along a line 30 to high pressure jets 31, which cleanse the filter belt 18, the dislodged material and water being drawn by vacuum up the line 32 back into cyclone 11. Some of the water from the pump 29 is fed up a line 33 to spray into the cyclone 11 for cleaning purposes, the remaining water being returned to the pit 10. Water from the water tank 28 can also be discharged to the pit 10 along a line 34.

If the water from the separator 26 contains emulsified products, the apparatus according to the invention may include a clarifier, such as a centrifuge or static filter type. Further, the apparatus may include automatic dosing means, for adding chemicals or other treatment material to the water before discharge thereof.

The apparatus illustrated is all mounted on the chassis of a wheeled vehicle (not shown).

## Claims

1. Mobile draining apparatus for waste pits, which comprises a vehicle having mounted thereon:
means for extracting waste material from a waste pit;
a water separator for removing water from other constituents of the extracted waste material;
means for returning at least some of the water separated to the waste pit;
a container for accumulation and storage of waste material; and means for passing waste material from which water has been separated from said water separator to said container.

2. Apparatus according to claim 1, which further includes a solids separator.

3. Apparatus according to claim 2, in which said solids separator comprises a moving belt filter, which is adapted to retain solids and allow liquids to pass therethrough.

4. Apparatus according to any of claims 1 to 3, which includes an oil/water separator; means for feeding material from the settling tank to the oil/water separator: and one or more containers into which the oil and water separated by said oil/water separator can be discharged.

5. Apparatus according to any of claims 1 to 4, which includes water clarifying means and/or automatic dosing means for adding treatment chemicals to the water before discharge thereof.

6. Apparatus according to any of claims 1 to 6, where said extraction means comprises a vacuum pump, which is arranged to raise the contents into a cyclone for separation of air from said contents.

7. Apparatus according to claim 6, which is arranged for discharge of said contents through an air lock comprising two valves respectively above and below a chamber, the valves being operable in sequence and at a desired rate to control the discharge of the contents to the solids separator.

8. A method of draining a waste pit, which comprises providing apparatus according to any of claims 1 to 7, extracting the contents of said pit, separating water from the extracted contents, returning at least some of the separated water to the pit, and accumulating the remainder of said extracted contents in said apparatus.